# EUROPÄISCHE PATENTSCHRIFT

(11) **EP 3 956 094 B1**
(45) Veröffentlichungstag und Bekanntmachung des Hinweises auf die Patenterteilung: **20.11.2024**
(21) Anmeldenummer: 20717577.9
(22) Anmeldetag: 27.03.2020
(51) Int. Cl.: B23F 5/16, B23Q 17/09, G05B 19/4065, B23F 23/12, B23Q 17/12

(54) **VERFAHREN DES ERZEUGENS ODER BEARBEITENS EINER VERZAHNUNG**
METHOD FOR PRODUCING OR MACHINING TOOTHING
PROCÉDÉ DE PRODUCTION OU D'USINAGE D'UNE DENTURE

(30) Priorität: 15.04.2019 DE 102019002752
(43) Veröffentlichungstag der Anmeldung: 23.02.2022
(73) Patentinhaber: GLEASON-PFAUTER MASCHINENFABRIK GMBH, 71636 Ludwigsburg (DE)
(72) Erfinder: KRESCHEL, Jürgen, 71282 Hemmingen (DE)
(74) Vertreter: Leinweber & Zimmermann
(86) Internationale Anmeldenummer: PCT/EP2020/058776
(87) Internationale Veröffentlichungsnummer: WO 2020/212123

(56) Entgegenhaltungen:
- EP-A1- 1 195 668
- EP-A1- 3 144 755
- EP-A2- 2 853 331
- WO-A1-2018/073047
- WO-A1-2019/011602
- WO-A1-2019/096542
- FR-A1- 2 695 723
- US-A- 4 723 219
- US-A- 4 849 741

## Beschreibung

Die Erfindung betrifft ein Verfahren des Erzeugens oder Bearbeitens einer Verzahnung an einem Werkstück, bei dem das um seine Drehachse drehend angetriebene Werkstück in wälzenden Bearbeitungseingriff mit einer um eine insbesondere unter einem von Null verschiedenen Achskreuzwinkel zur Werkstückdrehachse stehende Drehachse rotierenden Werkzeugverzahnung gebracht wird, sowie eine dazu ausgelegte Verzahnungsmaschine. Derartige Verfahren sind dem Fachmann gut bekannt, beispielsweise als das z.B. in EP 2 537 615 A1 beschriebene Wälzschälen, welches Dokument hierin hinsichtlich Terminologie und Bearbeitungseingriff des Wälzschälens durch Bezugnahme eingeschlossen ist, wobei das Wälzschälen eine bevorzugte Verzahnungsbearbeitung der Erfindung darstellt.

Bei der Bearbeitung insbesondere größerer Werkstückchargen werden die mit der Werkzeugverzahnung ausgestalteten Werkzeuge in regelmäßigen Abständen durch neue Werkzeuge ausgetauscht, da aufgrund ihres fortschreitenden Verschleißes die Bearbeitungsqualität unterhalb der erwünschten Toleranzen sinkt. Da Werkzeugwechsel zu Lasten der durchschnittlichen Bearbeitungszeit pro Werkstück gehen, versucht man eine möglichst lange Standzeit durch z.B. verschleißerhöhende Beschichtungen zu erreichen. Des Weiteren versucht man, den Werkzeugaustausch möglichst lange hinauszuzögern, d.h. nicht zu früh zu wechseln. Dies wird beispielsweise dadurch realisiert, dass man regelmäßig Stichproben der erzeugten Werkstückverzahnungen nimmt, beispielsweise deren Zahnflanken auf Profilabweichungen hin überprüft, und einen Werkzeugwechsel dann vornimmt, wenn die Abweichungen der Werkstückflanken von ihrer angestrebten Idealform eine geeignet gesetzte Toleranzschwelle überschreiten.

Gelegentlich kann es auch zu einem Werkzeugversagen, beispielsweise dem Bruch eines Werkzeugzahns kommen. Ein derartiges Einmalereignis wird von den bei modernen CNC-Maschinen üblichen Überwachungsmechanismen festgestellt und zur Vermeidung weiterer Beschädigungen der Maschine ein Notstopp eingeleitet.

WO 2018/073047 A1 lehrt die Verbesserung der Standzeit von Schälrädern durch Spanflächenphasen an den Schneidzähnen mit variierendem Phasenwinkel und offenbart ein Verfahren gemäß dem Oberbegriff des Anspruchs 1.

EP 1 195 668 A1 lehrt Prozessüberwachungssysteme zur prozessbegleitenden Verschleißerkennung an Wälzfräsern unter Verwendung mehrerer normierter und gewichteter Überwachungsparameter.

Trotz all derartiger Sicherheitsmaßnahmen kommt es jedoch gelegentlich vor, dass ggf. erst im späteren Gebrauch der verzahnten Werkstücke ein Werkstückfehler festgestellt wird, der auf nicht innerhalb der gewünschten Toleranzen liegenden Werkstückverzahnungsdaten zurückzuführen ist. Selbst wenn eine solche Abweichung noch vor dem späteren Gebrauch, etwa einer Endprüfung noch festgestellt wird, entstehen Unsicherheiten hinsichtlich der Frage, ob dies auf einen Werkstückeinzelfall zurückzuführen ist oder ggf. diesem fehlerhaften Werkstück vorangehende oder nachfolgende Werkstücke der Charge ebenfalls betroffen sein könnten.

Angesichts dieser Schwierigkeiten liegt der Erfindung die Aufgabe zugrunde, ein Verfahren der eingangs genannten Art insbesondere hinsichtlich einer guten Kombination aus einerseits Werkzeugstandzeit und andererseits Zuverlässigkeit zu verbessern.

Diese Aufgabe wird von der Erfindung in verfahrenstechnischer Hinsicht von einer Weiterbildung des Verfahrens mit den Merkmalen von Anspruch 1 gelöst. Aufgrund der erfindungsgemäßen Überwachung wird somit erreicht, dass eine Fehlerwahrscheinlichkeit für ein Werkstück oder fehlerhafte Erzeugung eines Werkstücks reduziert wird, da bereits während des Bearbeitungseingriffs eine Information über den lokal größten Werzeugverschleiß vorliegt. Entsprechend können frühzeitig geeignete Maßnahmen getroffen werden wie etwa eine Unterbrechung der Bearbeitung nach dem gerade bearbeiteten Werkstück, durch Bearbeitungsdurchgang des Werkstücks oder sogar ein unmittelbares Anhalten des Verfahrens. Die Standzeit erhöht sich durch ein möglichst langes Ausreizen des derzeit eingesetzten Werkzeugs unter Reduzierung des Folgeaufwands, sollte man zu nah an die Toleranzgrenze für die Werkzeuge herankommen oder diese überschreiten.

In einer bevorzugten Ausgestaltung bezieht die Überwachung Periodizitäten auf Zeitskalen ein, die größer als das Produkt aus Zähnezahl und Drehzahl des Werkstücks sind. Auf diese Weise können besonders geeignet relative Einflüsse des am meisten verschlissenen Werkzeugzahns festgestellt werden.

Besonders bevorzugt wird hierzu ein von der sensorischen Erfassung generiertes Zeitsignal einer Transformation in den Komplementärraum, insbesondere einer Fourier-Transformation unterzogen. Dies erleichtert die Auswertung und erlaubt die Einführung geeigneter und gewünschter Abbruchkriterien.

In diesem Zusammenhang ist es bevorzugt vorgesehen, dass die Überwachung ein über das transformierte Signal gelegtes Überwachungsfenster beinhaltet. Es wird somit gezielt auf das Verhalten des transformierten Signals in einem Bereich geprüft, in dem der Einfluss des am meisten verschlissenen Werkzeugzahns quantitativ am meisten zur Geltung kommt.

Wie oben bereits erläutert, soll nach ggf. variabel definierbaren Abbruchkriterien eine unveränderte Bearbeitung der Werkstückcharge nicht mehr erfolgen. Demgemäß ist vorgesehen, dass die Überwachung ein Warnsignal erzeugt, wenn die Unregelmäßigkeit ein vorgegebenes Maß übersteigt. Das Warnsignal kann dabei aus einer Klasse unterschiedlicher Warnstufen darstellenden Signalen ausgewählt werden, auf die bedienerseitig reagiert werden kann, jedoch auch Signale umfassen, auf die die Maschine selbsttätig reagiert. Beispielsweise kann in einer Vorwarnstufe ein Maschinenbediener zur Begutachtung der aktuellen quantitativen Bestimmung der Unregelmäßigkeit informiert werden. Fehlen zur Vervollständigung einer Werkstückcharge nur noch mehrere Werkstücke, kann der Bediener entscheiden, dass die Werkstückcharge noch abgeschlossen wird und z.B. einen Werkzeugwechsel vor Beginn der nächsten Werkstückcharge veranlassen. Gegebenenfalls könnte auch eine derartige Entscheidungsfindung durch geeignete Algorithmen von der Maschine selbst getroffen werden. Jedenfalls ist bevorzugt vorgesehen, dass ein Warnsignal einer so relevanten Stufe enthalten ist, dass jedenfalls kein neues Werkstück mehr mit dem derzeit eingesetzten Werkzeug bearbeitet wird.

Bevorzugt wird ein Kriterium für das Abgeben des Warnsignals und/oder die Auswahl des Warnsignals aus den verfügbaren Warnstufen, genauer gesagt das der Erzeugung des Warnsignals zugrundeliegende Übersteigen der Unregelmäßigkeit über ein vorgegebenes Maß aufgrund einer Übertretung einer vorgegebenen, auf das Überwachungsfenster bezogenen Schwelle durch das transformierte Signal festgestellt. Bei der Schwelle könnte es sich etwa um eine Schwelle für das im Überwachungsfenster aufintegrierte transformierte Signal handeln. In einer besonders einfachen und dennoch zuverlässigen Form wird jedoch eine Amplitudenschwelle herangezogen. Letztere wird naturgemäß von dem schnellst wachsenden Peak im Überwachungsfenster als erstes überschritten, so dass auch hier die Berücksichtigung des Einflusses des meist verschlissensten Werkzeugzahns gezielt ausgenutzt wird.

Hinsichtlich der Erfassung des Bearbeitungseingriffs wird bevorzugt bei der sensorischen Erfassung ein akustisches Signal aufgenommen. Dies könnte beispielsweise eine über ein Mikrofon getätigte Aufnahme beinhalten. Bevorzugt wird jedoch ein von dem Bearbeitungseingriff hervorgerufener Körperschall ausgenutzt und Sensoren wie Schwingungssensoren/Beschleunigungssensoren zur Signalerfassung eingesetzt, die beispielsweise am das Werkzeug tragenden Werkzeugkopf angebracht sind. Üblicherweise reicht ein Sensor, zur Verifizierung oder Ausfallsicherheit jedoch auch mehrere Sensoren herangezogen werden. Ein beispielsweise eingesetzter Beschleunigungssensor funktioniert dabei nach dem Grundprinzip, dass beispielsweise eine seismische Masse federaufgehängt im Beschleunigungssensorgehäuse vorhanden ist und eine bei Beschleunigung des Sensors aufgrund der sich gegenüber dem Sensorgehäuse trägheitsbedingt veränderten Massenposition ermittelt wird, die über den Federweg messbar ist. Bevorzugt werden Sensoren mit einer möglichst hohen Eigenfrequenz herangezogen, wozu piezoelektrische Sensoren als geeignet angesehen werden. Die physikalische Einheit der vom Sensor erfassten Amplitudengröße, beispielsweise eine in mg (g=9,81 m/s²) angegebene Amplitude ist jedoch nicht die einzige Realisierungsmöglichkeit, es könnte auch die Geschwindigkeit der Schwingung in Einheiten von z.B. in mm/s herangezogen werden. Geeignete Sensorik ist dem Fachmann verfügbar. Des Weiteren könnte als Ausgangssignal auch ein Leistungswert des Prozesses herangezogen werden, etwa die Ströme von dem Drehantrieb der Werkzeugspindel oder Werkstückspindel.

In die Evaluierung des transformierten Signals werden bevorzugt Zeitbereiche des sensorisch erfassten Zeitsignals herangezogen, die in wenigstens einem Arbeitsdurchgang aufgenommen werden, bei dem der über die Verzahnungsabwicklung betrachtete Kontaktbereich größer ist als in einer Mehrzahl der anderen Durchgänge. Hierbei wird der fortgeschrittenste Verschleiß am wirksamsten erfasst.

Ebenfalls ist vorgesehen, dass die diesbezügliche sensorische Erfassung in einem Durchgang wenigstens in einem Bereich erfolgt, der zwischen einem vorschubbedingten vollen Eintreten der Werkzeugverzahnung bis vor ihrem begonnenen Austreten liegt. Dies erhöht die Stabilität und Aussagekraft des transformierten Signals. Umgekehrt gesehen wird es auch bevorzugt, dass die mit dem Eintreten der Werkzeugverzahnung hinsichtlich axialen Vorschubs einhergehenden Änderungen des Bearbeitungseingriffs abgewartet werden, bevor Sensormessungen mit in das transformierte Signal einfließen. Beispielsweise wird hierzu vorgesehen, dass die einfließenden erfassten Zeitwerte erst bei Erreichen von 20%, 35% oder 50% der Verzahnungsbreite des Werkstücks aufgenommene Werte sind.

Eine Länge des Zeitintervalls, das der Bestimmung des transformierten Signals zu Grunde gelegt wird, wird bevorzugt eine Aufnahmelänge von wenigstens 0,1 Sekunden herangezogen, bevorzugt jedoch wenigstens 0,3 Sekunden oder wenigstens 0,5 Sekunden. Grundsätzlich ist das transformierte Signal abschneidungsbedingt bei sehr niedrigen Frequenzen ungenau und jedenfalls hinsichtlich der dortigen Amplituden nicht voll belastbar. Dies stellt jedoch für die Erfindung kein größeres Hindernis dar, da im transformierten Signal auch Harmonische erfasst werden, auf die bzw. das mit der größten Amplitude ein Amplituden-Schwellenwert bezogen werden kann.

In einer bevorzugten Ausgestaltung sind die Zähnezahlen von Werkstück und Werkzeug kommensurabel oder wenigstens quasi-kommensurabel. Kommensurabel bedeutet, dass ein größter gemeinsamer Teiler der Zähnezahlen von Werkzeug und Werkstück ungleich Eins existiert, insbesondere ein ungerader größter gemeinsamer Teiler, quasi-kommensurabel bedeutet, dass diese Bedingung wenigstens für fiktive Zähnezahlen gilt, die summarisch um maximal n von den tatsächlichen Zähnezahlen abweichen, mit n≤1/3 dieses größten gemeinsamen Teilers. Beispielsweise ist das nachstehende konkrete Ausführungsbeispiel mit Zähnezahlen 85 und 51 kommensurabel mit größtem gemeinsamen Teiler 17, und Zähnezahlen von 53 und 83 ließen sich durch jeweilige Änderung um 2 hierauf zurückführen (mit 2+2=4<17/3), so dass für diese Paarung eine Quasi-Kommensurabilität vorliegt. Bevorzugt ist der größte gemeinsame Teiler 5 oder größer, insbesondere 7 oder größer.

In diesem Zusammenhang wird auch bevorzugt ein Unterschied in den Zähnezahlen von Werkstück und Werkzeug von wenigstens 3, insbesondere wenigstens 5, insbesondere wenigstens 7. Mit derartigen Verhältnissen werden geringere Schwebungseffekte mit anderen Maschinenfrequenzen und somit ein klareres Signal im Komplementärraum erreicht, was eine Bestimmung genauerer Schwellenwerte erleichtert.

Zudem ist bevorzugt ein von der Überrollung des Werkzeugs im Werkstück abhängiger Bereich des transformierten Signals von der Überwachung miteinbezogen. Die Abhängigkeit kann z.B. darin bestehen, dass das Überwachungsfenster eine aus Werkstückdrehzahl multipliziert mit dem Überrollungsfaktor gebildeten Wert umfasst, und/oder wenigstens eine der nächsten (z.B. bis zu fünften oder sechsten) Harmonischen dieses Werts.

In vorrichtungstechnischer Hinsicht ist noch eine Verzahnungsmaschine zum Erzeugen oder Bearbeiten einer Verzahnung an einem Werkstück, mit einer drehbar angetriebenen Lagerung für das Werkstück und einer drehbar angetriebenen Lagerung für ein verzahntes Werkzeug und einer Steuereinrichtung zum Steuern eines in Wälzkopplung erfolgenden Bearbeitungseingriffs unter Schutz gestellt, die die weitern Merkmale des Anspruchs 12 aufweist.

Die Vorteile der erfindungsgemäßen Verzahnungsmaschine ergeben sich aus den obigen Vorteilen des erfindungsgemäßen Verfahrens. Ebenfalls wird das Verfahren in Form eines auf einem Datenträger abspeicherbaren Überwachungsprogramms gemäß Anspruch 15 unter Schutz gestellt.

Weitere Merkmale, Einzelheiten und Vorteile der Erfindung ergeben sich aus der nachfolgenden Beschreibung mit Bezug auf die beigefügten Figuren, von denen
Fig. 1 eine Schnittdarstellung eines Schälrads und einer Innenverzahnung zeigt,
die Fig. 2a bis 2c Abnutzungszustände eines Werkzeugzahns zeigen,
Fig. 3 eine Darstellung eines transformierten Erfassungssignals passend zu Fig. 2a zeigt,
Fig. 4 eine Darstellung eines transformierten Erfassungssignals passend zu Fig. 2b zeigt,
Fig. 5 eine Darstellung eines transformierten Erfassungssignals passend zu Fig. 2c zeigt, sowie
Fig. 6 eine Wälzschälmaschine zeigt.

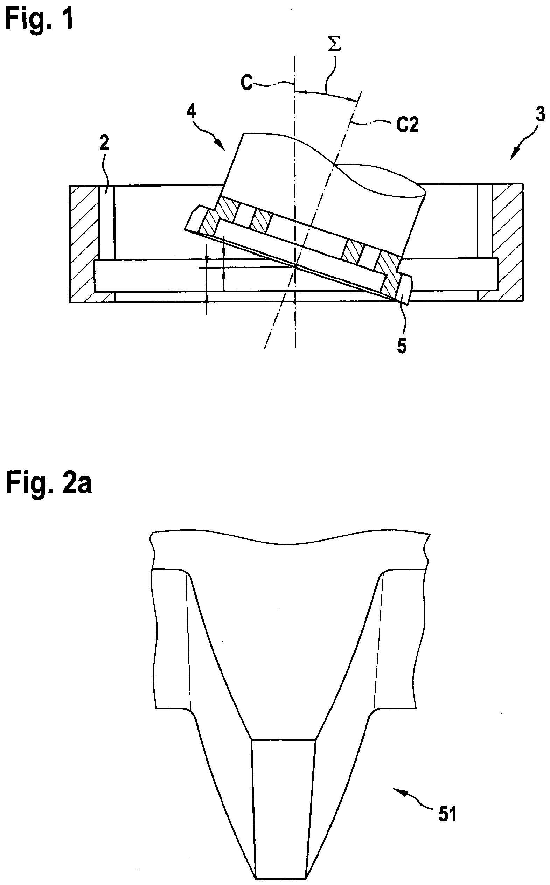

Im Folgenden wird die Erfindung anhand eines konkreten Beispiels für das Wälzschälen eines Werkstücks 3 mit Innenverzahnung 2 mittels eines Schälrads 4 mit Werkzeugverzahnung 5 gezeigt. Wie aus Fig. 1 erkennbar ist, stehen die Werkstückdrehachse C und Werkzeugdrehachse C2 unter einem Achskreuzwinkel Σ. Bei der gewählten Darstellung erfolgt die Bearbeitung im Achskreuzpunkt und die Achsabstandsachse verläuft orthogonal zur Papierebene, es sind jedoch auch außermittige Bearbeitungseingriffe denkbar, ebenso wie eine Bearbeitung von außenverzahnten Werkstücken.

Bei dem konkreten Ausführungsbeispiel dreht sich das Werkstück mit 353 Umdrehungen pro Minute und das Werkzeug mit 589 Umdrehungen pro Minute, und die Zähnezahl des Werkstücks z beträgt 85, wohingegen das Werkzeug eine Zähnezahl z2 von 51 hat. Die Zähnezahlen haben somit einen größten gemeinsamen Teiler von 17, und das Werkzeug überrollt das Werkstück fünfmal, d.h. nach fünfmaliger Drehung des Werkzeugs erfolgt der Eingriff zwischen dem gleichen Werkzeugzahn mit der gleichen Werkstückzahnlücke erneut. Es könnten jedoch auch andere kommensurable oder quasi-kommensurable Zähnezahlverhältnisse herangezogen werden.

Pro Werkstückumdrehung werden bei dem gewählten Werkzeug ohne Sprungfaktor alle Zahnlücken des Werkstücks bearbeitet, woraus sich eine Eingriffsfrequenz aus dem Produkt der Zähnezahl des Werkstücks und der Drehzahl des Werkstücks berechnen lässt, die für das konkret herangezogene Beispiel bei 500 Hz liegt.

Ein bei diesem Ausführungsbeispiel am Werkzeugkopf der Maschine angebrachter Sensor 64 nimmt ein Zeitsignal der im Bearbeitungseingriff auftretenden Schwingungen auf. Das Sensorsignal könnte jedoch auch durch andere Sensoren erfasst werden, wie eingangs erläutert. Die Aufnahme kann fortlaufend erfolgen, jedenfalls aber in Zeiträumen, die für eine weitere Auswertung des Signals herangezogen werden. In diesem Ausführungsbeispiel des Wälzschälens mit z.B. acht Durchgängen steigender Zustellung und tieferen Schneidens wird beispielsweise der fünfte Schnittdurchgang gewählt, bei dem der Kontaktbereich zwischen der Werkzeugverzahnung 5 und der Werkstückverzahnung 2 vergleichsweise groß ist, und beginnend mit in diesem Ausführungsbeispiel der Bearbeitung auf Höhe der Mitte der Werkstückverzahnungsbreite ein für eine Sekunde aufgenommenes Signal mittels Fourier-Transformation transformiert. Es können, wie in diesem Ausführungsbeispiel, auch noch Wiederholungsmessungen durchgeführt werden, z.B. zwei bis vier weitere Messungen und Transformationen, bevorzugt werden jedoch nur Werte herangezogen, solange der axiale Vorschub noch nicht so weit fortgeschritten ist, dass kein voller Bearbeitungseingriff mehr vorliegt.

Aus den in diesem Ausführungsbeispiel drei transformierten Aufnahmen wird eine gemittelte Darstellung des Sensorsignals im Komplementärraum durch Mittlung der einzelnen transformierten Signale gebildet.

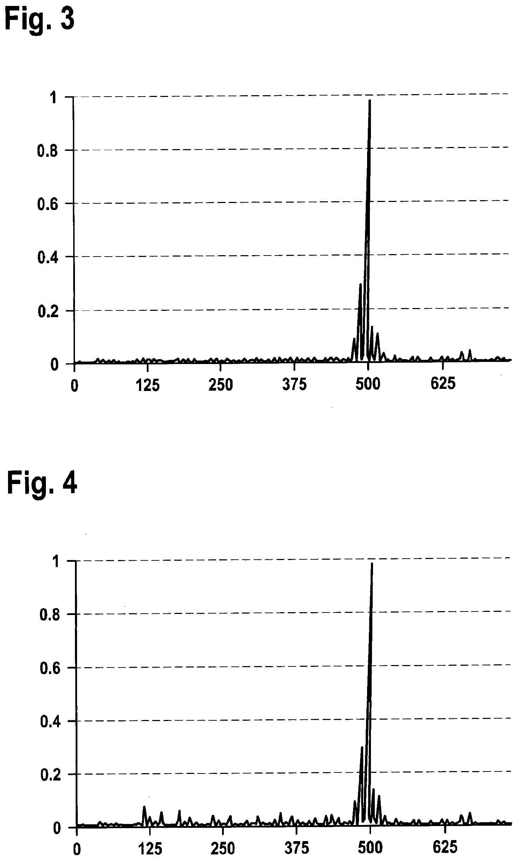

Ein solches Signal ist in Fig. 3 dargestellt, das die mit einem neuen Schneidrad (Fig. 2a) durchgeführte Bearbeitung widerspiegelt. Man erkennt einen Peak bei der oben erwähnten Eingriffsfrequenz von 500 Hz.

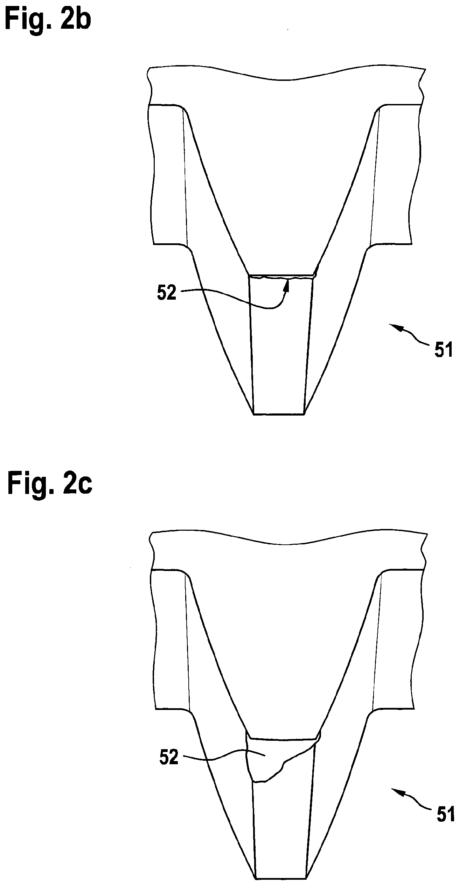

Im Verlaufe der weiteren Bearbeitung einer Werkstückcharge nutzen sich die Werkzeugzähne ab, jedoch in der Regel nicht genau gleichmäßig, vielmehr wird in der Regel ein Werkzeugzahn 51 der erste sein, an dem sich Verschleißerscheinungen 52 zeigen und bei dem der Verschleiß am schnellsten voranschreitet. Dieses Voranschreiten ist in Fig. 2 für einen solchen Zahn dargestellt, in Fig. 2b mit einer Abnutzung im Bereich von 0,2 mm, in Fig. 2c mit einer Abnutzung von bereits 2 mm, was zu Bearbeitungsfehlern im Eingriff führt, die außerhalb der Toleranzen für die gefertigten Werkstücke liegen.

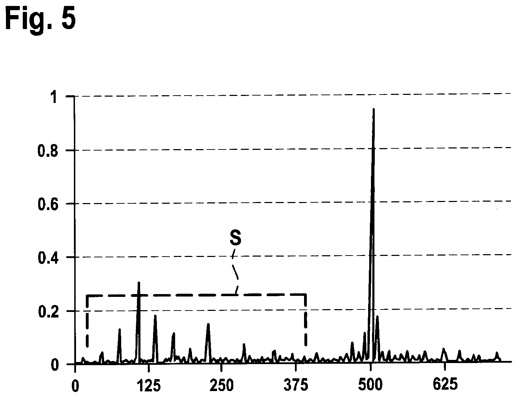

Indem die anhand von Fig. 3 beschriebenen Messungen und Auswertungen des Messsignals fortgeführt werden, kann ein werkzeugverschleißbedingt erzeugter Ausschuss an Werkstücken vermieden werden, da der Prozess der Bearbeitung einer Werkstückcharge unterbrochen wird, wenn eine vorgegebene Schwelle im Messsignal unterhalb der Eingriffsfrequenz überschritten wird. Diese Schwelle ist in Fig. 5 dargestellt und mit S bezeichnet. Diese Schwelle S wird im Vergleich bei einem Werkzeugzahn, dessen Abnutzung zwar relativ am weitesten fortgeschritten, absolut jedoch noch im weiternutzbaren Rahmen liegt, noch nicht erreicht. Dahingegen bilden sich Peaks, die sich in diesem Ausführungsbeispiel vornehmlich im Bereich von 120 (und auch knapp 150) Hz ausbilden, und bei stärkerem Verschleiß dieses Werkzeugzahns deutlich erhöhen und ggf. sogar den Peak bei der Eingriffsfrequenz amplitudenmäßig überschreiten. Dies lässt sich dadurch verstehen, dass der verschlissene Werkzeugzahn bei der gegebenen Überrollung eine Veränderung der Zahnlückenform (in der auf ihn bezogenen Reihenfolge von 1, 52, 18, 69, 35 und 1) der dortigen Zahnlücken des Werkstücks verändert, deren in Werkstückdrehung erfolgender Eingriff auch mit anderen Werkzeugzähnen jedoch in der Reihenfolge 1, 18, 35, 52 und 69 erfolgt und somit bei einer Grundfrequenz von ca. 29,4 Hz, die als Abstand zwischen den im Überwachungsfenster liegenden Peaks identifizierbar ist, so dass im konkreten Beispielsfall die relevant überwachten Peaks die der 4. und 5. Harmonischen sind. Ein Überwachungsfenster würde daher bei dem konkreten Ausführungsbeispiel in den Bereich zwischen 80 und 160 Hz gelegt werden können, wobei sich je nach Aufnahmezeit und anderen Zähnezahlverhältnissen entsprechend andere Einzelwerte ergeben können, so dass zur Vermeidung zu starker Individualisierung das Überwachungsfenster größer gewählt werden könnte, beispielsweise im Bereich 30 bis 350 Hz oder einem ersten Prozentsatz der Eingriffsfrequenz (z.B. 5%, 10% oder 15%) zu einem zweiten Prozentsatz (z.B. 80%, 65% oder 50%) der Eingriffsfrequenz.

Es versteht sich, dass die Schwellenhöhe durch Vorabbestimmung auf einen aussagekräftigen Wert eingerichtet werden kann. Hierzu bedarf es lediglich Testversuche mit Werkzeugen, bei denen ein Zahn um die Verschleißgrenze herum abgenutzt ist und Erstellen der in Fig. 3 bis Fig. 5 gezeigten und oben erläuterten Fourier-transformierten Sensorsignale. Insbesondere für größere Werkstückchargen lässt sich somit ein sehr präzises Kriterium einrichten, gemäß dem ein Werkzeugtausch zwar rechtzeitig, aber nicht zu früh bewirkt werden kann und das auch anspricht, wenn eine durchschnittliche Abnutzung des Werkzeugs noch als zur weiteren Bearbeitung ausreichend erachtet würde.

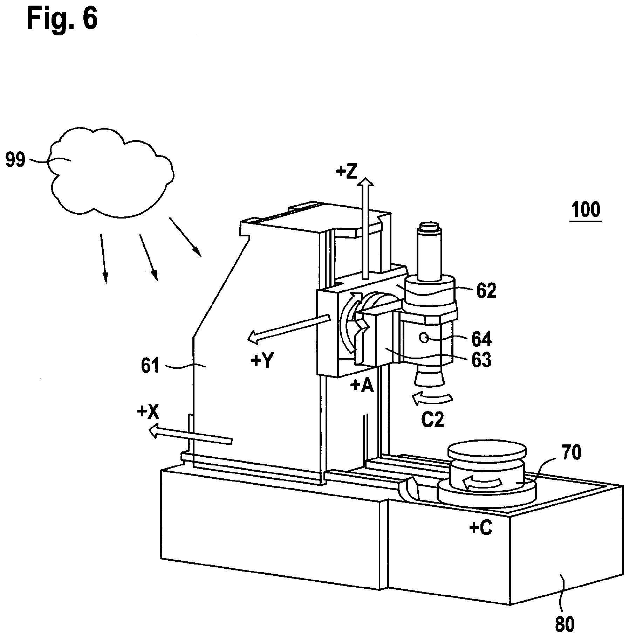

Eine entsprechende Überwachungssteuerung könnte in eine (Gesamt-)Steuerung 99 der in Fig. 6 gezeigte Wälzschälmaschine integriert werden, die wie ansonsten durchaus üblich ein Maschinenbett 80 mit einem Werkstücktisch 70 aufweist, um den ein Werkstück mit einer nicht gezeigten Aufspannvorrichtung um die Drehachse C drehend antreibbar ist, und an dem werkzeugseitig CNC-gesteuerte Maschinenachsen vorgesehen sind, um die erforderlichen Bewegungen für und im Bearbeitungseingriff durchzuführen. Dazu gehört eine radiale Zustellachse X, eine axiale Vorschubachse Z, eine Schwenkachse A zur Einstellung des Achskreuzwinkels zwischen der Werkzeugdrehachse C2 und der Werkstückdrehachse C und eine in diesem Ausführungsbeispiel der Schwenkachse A nachgeschaltete Tangentialachse Y für z.B. außermittige Bearbeitungseingriffseinstellungen. Entsprechend sind in Fig. 6 dargestellt ein Radialschlitten 61, der einen Vertikalschlitten 62 trägt, auf dem ein in der Ebene orthogonal zur Radialrichtung X nochmals linear beweglicher Schlitten 63 mit dem Werkzeugkopf für das Werkzeug angeordnet ist. Der beispielsweise zur Erfassung des Zustandes des Bearbeitungseingriffs herangezogene Sensor ist in Fig. 6 mit dem Bezugszeichen 64 versehen. Das von dem Sensor erfasste Zeitsignal könnte zudem auch noch für andere Überwachungen des Prozesses mitgenutzt werden.

Die Erfindung ist nicht auf das konkret dargestellte Ausführungsbeispiel eingeschränkt.

## Patentansprüche

1. Verfahren des Erzeugens oder Bearbeitens einer Verzahnung (2) an einem Werkstück (3), bei dem das um seine Drehachse (C) drehend angetriebene Werkstück in wälzenden Bearbeitungseingriff mit einer um eine insbesondere unter einem von Null verschiedenen Achskreuzwinkel (Σ) zur Werkstückdrehachse stehende Drehachse (C2) rotierenden Werkzeugverzahnung (5) gebracht wird, bei dem man den Bearbeitungseingriff mittels einer bereits während des Bearbeitungseingriffs erfolgenden sensorischen Erfassung selbigens automatisch überwacht,
**dadurch gekennzeichnet, dass**
man unter Einbeziehung von Periodizitäten auf Zeitskalen, die größer als das Produkt aus Zähnezahl (Z) und Drehzahl (n) des Werkstücks (3) sind, auf eine von einem gegenüber anderen Werkzeugzähnen höheren Werkzeugverschleiß (52) wenigstens eines Werkzeugzahns (51) stammende wiederkehrende Unregelmäßigkeit überwacht.

2. Verfahren nach Anspruch 1, bei dem ein von der sensorischen Erfassung generiertes Zeitsignal einer Transformation in den Komplementärraum, insbesondere einer Fourier-Transformation unterzogen wird.

3. Verfahren nach Anspruch 2, bei dem die Überwachung ein über das transformierte Signal gelegtes Überwachungsfester beinhaltet.

4. Verfahren nach einem der vorhergehenden Ansprüche, bei dem die Überwachung ein Warnsignal erzeugt, wenn die Unregelmäßigkeit ein vorgegebenes Maß übersteigt.

5. Verfahren nach Anspruch 3 und 4, bei dem dieses Übersteigen aufgrund einer Übertretung einer vorgegebenen, auf das Überwachungsfenster bezogenen Schwelle (S) durch das transformierte Signal festgestellt wird.

6. Verfahren nach einem der vorhergehenden Ansprüche, bei dem bei der sensorischen Erfassung ein akustisches Signal aufgenommen wird.

7. Verfahren nach einem der vorhergehenden Ansprüche, bei dem die sensorische Erfassung wenigstens in einem bearbeitenden Durchgang erfolgt, bei dem der über die Verzahnungsabwicklung betrachtete Kontaktbereich größer ist als in einer Mehrzahl der anderen Durchgänge.

8. Verfahren nach einem der vorhergehenden Ansprüche, bei dem die sensorische Erfassung in einem Durchgang wenigstens in einem Bereich erfolgt, der zwischen einem vorschubbedingten vollen Eintreten der Werkzeugverzahnung bis vor ihrem begonnenen Austreten liegt.

9. Verfahren nach einem der vorhergehenden Ansprüche, bei dem bei der sensorischen Erfassung mehrfache Aufnahmen von insbesondere wenigstens 0,1 Sekunden Aufnahmelänge erfolgen, und eine Mittelung über die Transformierten der mehreren Aufnahmen vorgenommen wird.

10. Verfahren nach einem der vorhergehenden Ansprüche, bei dem die Zähnezahlen (Z, Z2) von Werkstück und Werkzeug kommensurabel oder wenigstens quasi-kommensurabel sind.

11. Verfahren nach einem der Ansprüche 2 bis 10, bei dem ein von der Überrollung des Werkzeugs im Werkstück abhängiger Bereich des transformierten Signals von der Überwachung miteinbezogen wird.

12. Verzahnungsmaschine (100) zum Erzeugen oder Bearbeiten einer Verzahnung an einem Werkstück, mit einer drehbar angetriebenen Lagerung für das Werkstück und einer drehbar angetriebenen Lagerung für ein verzahntes Werkzeug und einer Steuereinrichtung (99) zum Steuern eines in Wälzkopplung erfolgenden Bearbeitungseingriffs, mit einer wenigstens einen Sensor (64) umfassenden automatischen Überwachungseinrichtung, die den Bearbeitungseingriff mittels einer bereits während des Bearbeitungseingriffs erfolgenden Erfassung selbigens durch den wenigstens einen Sensor überwacht,
**dadurch gekennzeichnet, dass** die Überwachungseinrichtung dazu ausgelegt ist, unter Einbeziehung von Periodizitäten auf Zeitskalen, die größer als das Produkt aus Zähnezahl (Z) und Drehzahl (n) des Werkstücks (3) sind, auf eine von einem gegenüber anderen Werkzeugzähnen höheren Werkzeugverschleiß wenigstens eines Werkzeugzahns stammende wiederkehrende Unregelmäßigkeit zu überwachen.

13. Verzahnungsmaschine nach Anspruch 12, bei der die Überwachungseinrichtung weiter zur Durchführung eines Verfahrens nach einem der Ansprüche 2 bis 11 ausgelegt ist.

14. Verzahnungsmaschine nach Anspruch 12 oder 13, bei der wenigstens ein Körperschallsensor an dem die Werkzeuglagerung bildenden Werkzeugkopf vorgesehen ist.

15. Überwachungsprogramm, das, wenn auf einer Steuereinrichtung (99) einer Verzahnungsmaschine ausgeführt, ein von der Maschine durchgeführtes Verfahren gemäß einem der Ansprüche 1 bis 11 ausführt und auf einem Datenträger abspeicherbar ist.

## Claims

1. A method of producing or machining a toothing (2) on a workpiece (3), wherein the workpiece, which is rotationally driven around its axis of rotation (C), is brought into rolling machining engagement with a tool toothing (5) rotating around an axis of rotation (C2) which in particular is at a non-null crossed-axes angle (Σ) to the axis of rotation of the workpiece, and wherein the machining engagement is automatically monitored through a capture thereof using sensors which is already taking place during the machining engagement,
**characterised in that**
the monitoring includes monitoring of periodicities on time scales which are greater than the product of the number of teeth (Z) and the rotational speed (n) of the workpiece (3) for a recurring irregularity originating from tool wear (52) of at least one tool tooth (51), which is greater than that of other tool teeth.

2. The method according to claim 1, wherein a time signal generated during the sensor-based capture is subjected to a transformation in the complementary space, in particular to a Fourier transformation.

3. The method according to claim 2, wherein the monitoring includes a monitoring window superimposed on the transformed signal.

4. The method according to one of the preceding claims, wherein the monitoring generates a warning signal if the irregularity exceeds a predetermined level.

5. The method according to claims 3 and 4, wherein this exceedance is determined based on the detection of an exceedance of a predetermined threshold (S) relating to the monitoring window by the transformed signal.

6. The method according to one of the preceding claims, wherein an acoustic signal is recorded during the sensor-based capture.

7. The method according to one of the preceding claims, wherein the sensor-based capture takes place in at least one machining pass, in which the contact region, viewed across the course of the toothing, is larger than in a plurality of the other passes.

8. The method according to one of the preceding claims, wherein the sensor-based capture takes place in one pass in at least one region which lies between a full entry of the tool toothing, caused by the feed rate, and the point at which it starts to exit.

9. The method according to one of the preceding claims, wherein multiple recordings of in particular at least 0.1 seconds in length are made during the sensor-based capture, and the transforms of the plurality of recordings are averaged.

10. The method according to one of the preceding claims, wherein the numbers of teeth (Z, Z2) of the workpiece and tool are commensurable or at least quasi-commensurable.

11. The method according to one of claims 2 to 10, wherein a region of the signal which is dependent on the tool rolling over in the workpiece is included in the monitoring.

12. A gear cutting machine (100) for producing or machining a toothing on a workpiece, comprising a rotatably driven bearing arrangement for the workpiece and a rotatably driven bearing arrangement for a toothed tool and a control device (99) for controlling a machining engagement that takes place in a rolling coupling, said control device comprising an automatic monitoring device which comprises at least one sensor (64) and monitors the machining engagement through a capture thereof, using the at least one sensor, which is already taking place during the machining engagement,
**characterised in that** the monitoring device is configured so as to include monitoring of periodicities on time scales that are greater than the product of the number of teeth (Z) and the rotational speed (n) of the workpiece (3), for a recurring irregularity originating from tool wear of at least one tool tooth which is greater than that of other tool teeth.

13. The gear cutting machine according to claim 12, wherein the monitoring device is further configured to carry out a method according to one of claims 2 to 11.

14. The gear cutting machine according to claim 12 or 13, wherein at least one structure-borne sensor is provided on the tool head forming the tool bearing arrangement.

15. A monitoring program which, when executed on a control device (99) of a gear cutting machine, executes a method according to one of claims 1 to 11 that is carried out by the machine, and which can be stored on a data medium.

## Revendications

1. Procédé de génération ou d'usinage d'une denture (2) sur une pièce (3), dans lequel la pièce, entraînée en rotation sur son axe de rotation (C), est amenée en prise d'usinage par roulement avec une denture d'outil (5) en rotation sur un axe de rotation (C2) demeurant notamment à un angle d'axes (Σ) par rapport à l'axe de rotation de la pièce qui est non nul, et dans lequel la prise d'usinage est soumise à une surveillance automatisée dans le cadre d'une détection par capteur mise en oeuvre au cours même de la prise d'usinage,
**caractérisé en ce que**
eu égard à des périodicités sur des échelles de temps supérieures au produit du nombre de dents (Z) et de la vitesse de rotation (n) de la pièce (3), on recherche, dans le cadre de ladite surveillance, une irrégularité récurrente issue d'une usure (52) accrue d'au moins une dent (51) de l'outil par rapport à celle des autres dents de l'outil.

2. Procédé selon la revendication 1, dans lequel un signal temporel généré dans le cadre de la détection par capteur est soumis à une transformation dans l'espace complémentaire, notamment une transformation de Fourier.

3. Procédé selon la revendication 2, dans lequel la surveillance comprend une fenêtre de surveillance superposée au signal transformé.

4. Procédé selon l'une des revendications précédentes, dans lequel la surveillance génère un signal d'avertissement lorsque l'irrégularité dépasse un niveau prédéterminé.

5. Procédé selon les revendications 3 et 4, dans lequel ce dépassement est déterminé par détection du fait que le signal transformé dépasse un seuil prédéterminé (S) en lien avec la fenêtre de surveillance.

6. Procédé selon l'une des revendications précédentes, dans lequel un signal acoustique est enregistré lors de la détection par capteur.

7. Procédé selon l'une des revendications précédentes, dans lequel la détection par capteur a lieu au moins au cours d'une passe d'usinage dans laquelle la zone de contact considérée lors du développement de la denture est plus grande que dans une pluralité d'autres passes.

8. Procédé selon l'une des revendications précédentes, dans lequel la détection par capteur s'effectue au cours d'une passe, au moins dans une zone s'étendant entre une entrée complète de la denture de l'outil, causée par l'avance, et le commencement de sa sortie.

9. Procédé selon l'une des revendications précédentes, dans lequel plusieurs enregistrements d'une durée notamment d'au moins 0,1 seconde sont effectués pendant la détection par capteur, et une moyenne est réalisée sur les transformées desdits plusieurs enregistrements.

10. Procédé selon l'une des revendications précédentes, dans lequel les nombres de dents (Z, Z2) de la pièce et de l'outil sont commensurables ou du moins quasi-commensurables.

11. Procédé selon l'une quelconque des revendications 2 à 10, dans lequel une région du signal transformé qui dépend du retournement de l'outil dans la pièce est prise en compte dans la surveillance.

12. Machine à tailler les engrenages (100) permettant de générer ou d'usiner une denture sur une pièce, comportant un montage entraîné en rotation pour la pièce et un montage entraîné en rotation pour un outil denté, ainsi qu'un dispositif de commande (99) permettant de commander une prise d'usinage s'effectuant avec roulement et comportant au moins un dispositif de surveillance automatique qui comprend au moins un capteur (64) et qui surveille la prise d'usinage dans le cadre d'une détection effectuée par ledit au moins un capteur et mise en oeuvre au cours même de la prise d'usinage,
**caractérisée en ce que** le dispositif de surveillance est conçu, eu égard à des périodicités sur des échelles de temps supérieures au produit du nombre de dents (Z) et de la vitesse de rotation (n) de la pièce (3), pour rechercher une irrégularité récurrente issue d'une usure accrue d'au moins une dent de l'outil par rapport à celle des autres dents de l'outil.

13. Machine à tailler les engrenages selon la revendication 12, dans laquelle le dispositif de surveillance est en outre conçu pour mettre en oeuvre un procédé selon l'une des revendications 2 à 11.

14. Machine à tailler les engrenages selon la revendication 12 ou 13, dans laquelle au moins un capteur de bruit solidien est prévu sur la tête d'outil formant le montage d'outil.

15. Programme de surveillance qui, lorsqu'il est exécuté sur un dispositif de commande (99) d'une machine à tailler les engrenages, exécute un procédé mis en oeuvre par la machine selon l'une des revendications 1 à 11, et qui peut être stocké sur un support de données.
